# EUROPEAN PATENT SPECIFICATION

(11) **EP 0 509 552 B1**
(45) Date of publication and mention of the grant of the patent: **21.09.1994**
(21) Application number: 92109777.0
(22) Date of filing: 16.03.1990
(51) Int. Cl.: F16B 7/18, E04B 1/58, E04H 5/12, B29C 65/56, F16B 19/10

(54) **Joining synthetic resin structural members**
Verbindung von Strukturelementen aus Kunstharz
Raccordement d'éléments structuraux en résine synthétique

(30) Priority: 16.03.1989 JP 64641/89
(43) Date of publication of application: 21.10.1992
(62) Divisional of application: 90302839.7
(73) Proprietor: ISHIKAWAJIMA-HARIMA JUKOGYO KABUSHIKI KAISHA, Chiyoda-ku Tokyo-to (JP); NIPPON SHOKUBAI CO., LTD., Chuo-ku, Osaka-shi, Osaka-fu 541 (JP)
(72) Inventor: KATO, Kanji, Chiba-shi, Chiba-ken (JP); MOCHIZUKI, Kesaaki, Ibaraki-ken (JP); HAMAMOTO, Akira, Kanagawa-ken (JP); OYA, Hiroshi, Tokyo-tu (JP); ANDO, Kozo, Tokyo-to (JP); NAMARITANI, Kazuo, Nara-ken (JP); FUJITA, Kenichi, Himeji-shi Hyogo-ken (JP); NAGAOKA, Futami, Nara-ken (JP)
(74) Representative: Jennings, Nigel Robin

(56) References cited:
- DE-A- 2 515 237
- FR-A- 2 222 516

## Description

The present invention relates to a method of joining or connecting a structural member made of a synthetic resin, such as fibre reinforced plastics (FRP), to a further such member. The method is particularly for use with synthetic resin members which are used in place of conventional timber or steel members, especially in the main framework of a cooling tower so as to increase the corrosion resistance and to simplify the operational control.

Many structural members of synthetic resin have been used instead of timber and metal. However, such synthetic resin members have scarcely been used in circumstances where they are subject to a heavy load.

For instance, in the field of cooling towers for cooling warm water by direct contact with a large quantity of surrounding air, synthetic resin members have been used only partially for small cooling towers for air-conditioning systems or the like.

Generally, large cooling towers, as are used in various chemical industries, include a main or load-bearing framework of timber or steel (see for example FR-A-2222516). Though being typically composed of Douglas fir timber which has been subjected to a pressure-preservative treatment or steel members plated with zinc in a hot dip galvanizing process, the main framework still tends to be easily corroded since it is within the tower which has an atmosphere of extremely high temperature and of extremely high humidity.

A framework composed of timber or steel members typically begins to be corroded after about ten and seven to eight years, respectively, at and around the upper portion of the framework adjacent to a distribution system, and this necessitates repair of the tower.

As the corrosion spreads, corroded pieces of timber or rust particles disperse into the cooled water, which may result in deterioration of the performance of the cooling tower, such as by clogging of the strainer in the water-cooling system or an increase in the load to which the pump is subjected.

It is therefore proposed by the present applicants that the main framework be constructed from synthetic resins such as FRP which have a high degree of corrosion resistance, even in the corrosive atmosphere of a cooling tower. However, there are many points to be considered before using FRP, such as the buckling strength of the FRP members, the influence on the strength of the FRP of the absorption of water and the anti-weathering capability of the FRP members.

The present invention is concerned with overcoming the above and other problems encountered in conventional cooling towers and its object is to propose a method of joining or connecting a synthetic resin structural member to a further synthetic resin or other structural member in an easy and secure manner.

The inventors have made extensive studies of the anti-corrosion properties of structural materials to find that synthetic resins are employable for structural members, i.e. that FRP members may be used to constitute the main framework of a cooling tower.

If a synthetic resin structural member which is hollow, that is to say which at least includes a hollow portion, is to be joined to a further member, which may be a structural member or a connector member, by means of a bolt it is important to ensure that when the bolt is tightened the hollow structural member is not deformed. According to a first aspect of the present invention a method of joining a hollow synthetic resin structural member to a further member is characterised by the steps of fitting a spacer with a hole therein into the hollow member with the hole in registry with opposed holes in the walls of the hollow member and inserting a bolt through a hole in the further member and through the hole in the spacer and tightening the bolt. The presence of the spacer within the hollow member through which the bolt passes ensures that the walls of the hollow member are not deformed inwardly when the bolt is tightened, that is to say when the nut is tightened on the bolt. The spacer member is preferably in the form of a tube or sleeve and its ends may engage the inner surfaces of the walls of the hollow member around the opposed holes formed therein so as to prevent them from being forced inwardly. However, this construction of the spacer member may be somewhat difficult to place in position, and it is therefore preferred that the ends of the spacer member are received in the opposed holes in the walls of the hollow member and are substantially flush with the outer wall surfaces of the hollow member. The ends of the spacer member will therefore be engaged by the bolt head and the nut, either directly or indirectly with the interposition of the further member.

In accordance with a further aspect of the present invention a method of joining a hollow synthetic resin structural member to a further structural member is characterised by the steps of fitting a spacer with a hole therein, e.g. a tube or sleeve, into the hollow member in registry with opposed holes in the walls thereof, inserting a bolt through one or more holes in a connector and through the hole in the spacer, tightening the bolt, placing a portion of the connector in which holes are formed into engagement with the other member, drilling a hole in the other member in alignment with one of the holes formed in the connector, securing a blind rivet in the aligned holes and repeating the drilling and riveting steps until the required number of rivets have been secured in the said other member. Due to the fact that the drilled rivet holes are formed one by one and after each hole is formed a rivet is secured or struck into it, the positioning of the blind rivet holes is very precise and ensures that, in use, the load is equally distributed between them and that the jointing work which is carried out on site is facilitated. The combined use of a bolt and blind rivets reduces the number of rivets which must be positioned whilst nevertheless ensuring a secure joint between the two structural members.

Further features and details of the present invention will be apparent from the following description of certain preferred embodiments which is given by way of example with reference to the accompanying diagrammatic drawings, in which:-
Figure 1(a) is a front elevation view of a first embodiment of the present invention in which a hollow synthetic resin structural member is connected to a further structural member or members;
Figure 1(b) is a sectional view thereof, on an enlarged scale;
Figure 2(a) is an elevation of a second embodiment of the present invention in which a hollow synthetic resin structural member is connected to another synthetic resin structural member inclined to it;
Figure 2(b) is a sectional view thereof, on an enclarged scale;
Figure 3 illustrates an application of the present invention to assembling the main framework of a cooling tower;
Figure 4(a) is an enlarged elevation of an upper connector used in the framework shown in Figure 3;
Figure 4(b) illustrates, on an enlarged scale, a vertical connector, a bolt connector and a bracing connector used in the framework shown in Figure 3; and
Figure 4(c) is an enlarged elevation of a foundation connector used in the framework shown in Figure 3.

The same reference numerals are used to designate similar parts through the Figures.

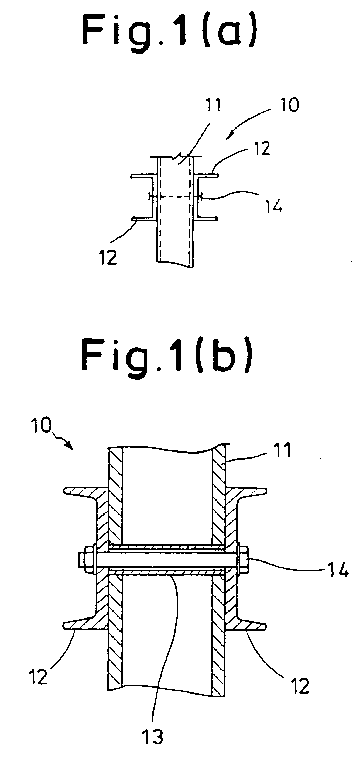

Referring firstly to Figures 1(a) and 1(b), the illustrated joint structure 10 serves to join a hollow synthetic resin structural member 11, such as an FRP hollow pipe of rectangular cross-section, with a shaped bar or bars of metal or FRP.

A spacer or sleeve 13 of a metal or synthetic resin is fitted through holes in opposite walls of the hollow member 11 such that opposite end faces of the spacer 13 are coplanar with the outer surfaces of the walls. The spacer 13 may be annular or of other hollow configuration in cross-section and may have a rib extending therefrom so as to enhance its buckling strength.

In the joining process, a structural member or members 12 of a metal or a synthetic resin and each having a bolt hole are positioned against the hollow member 11 so as to align the bolt hole(s) with the spacer 13. Thereafter, a bolt 14 is inserted through the bolt hole(s) of the structural member(s) 12 and spacer 13, as shown in Figure 1(b), and is tightened, in this case by the application of a nut.

The spacer 13 substantially prevents deformation in cross-section of the hollow member 11 and ensures a strong joint with the aid of the bolt 14, thus preventing any looseness or deformation.

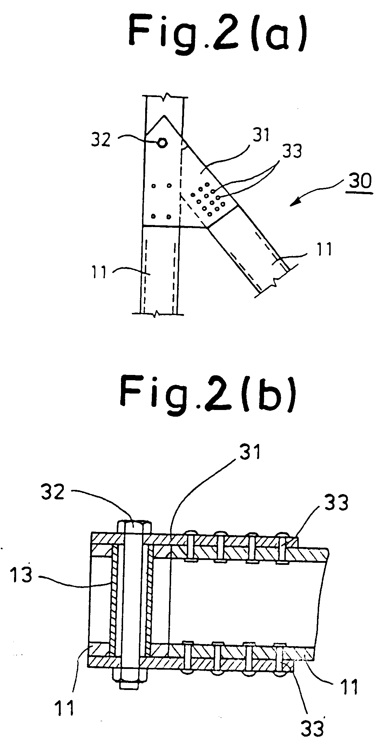

Figures 2a) and 2b) illustrate a joint structure 30 between a hollow synthetic resin structural member 11 and an inclined synthetic resin structural member including a connector 31, a bolt 32 and blind rivets 33.

The joint structure 30 includes a spacer or sleeve 13, which is substantially similar to that described in relation to Figure 1 and which is fitted into opposed holes in the joint portion of the hollow member 11 and receives a bolt 32.

The connector 31 comprises one or more plates and is made of metal or synthetic resin and is so formed that its shape corresponds to the joint angle between the members 11. The connector 31 has a previously drilled bolt hole and a plurality of previously drilled blind rivet holes.

In the joining process, the connector 31 is placed on the hollow member 11 to align the bolt hole on the connector 31 with the spacer 13 and then the bolt 32 is inserted and tightened.

Thereafter, the other member 11 is positioned on or against the portion of the connector 31 in which the blind rivet holes are formed. The process of drilling a blind rivet hole in the other member 11 in alignment with a hole in the connector 31 and striking a blind rivet 33 into the newly drilled hole is repeated until a predetermined number of blind rivets 33 have been positioned.

If necessary, the portion of said one member 11 in engagement with the connector 31 may have further blind rivet holes and the drilling and riveting operation described above is repeated so that the joint strength is increased.

In the joint structure the use of a single bolt to join the structural members with a high degree of accuracy is combined with the use of the blind rivets 33 and the connector 31 which do not require the drilling of opposed holes in the hollow pipe and holes are drilled on site only to make blind rivet holes in the pipe wall which will ensure a high degree of accuracy. The number of blind rivets to be positioned on site is thus decreased and the joint work is facilitated. A plurality of blind rivets bear a uniformly distributed load and a secure joint is ensured.

In this case, it is also possible to adjust the joint strength by selecting the number of the blind rivets 33 used.

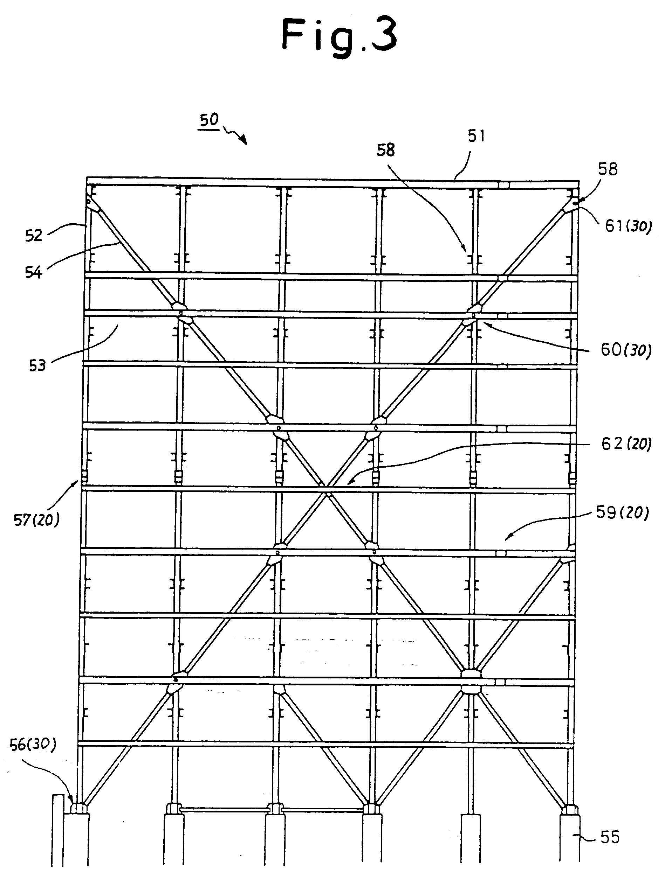

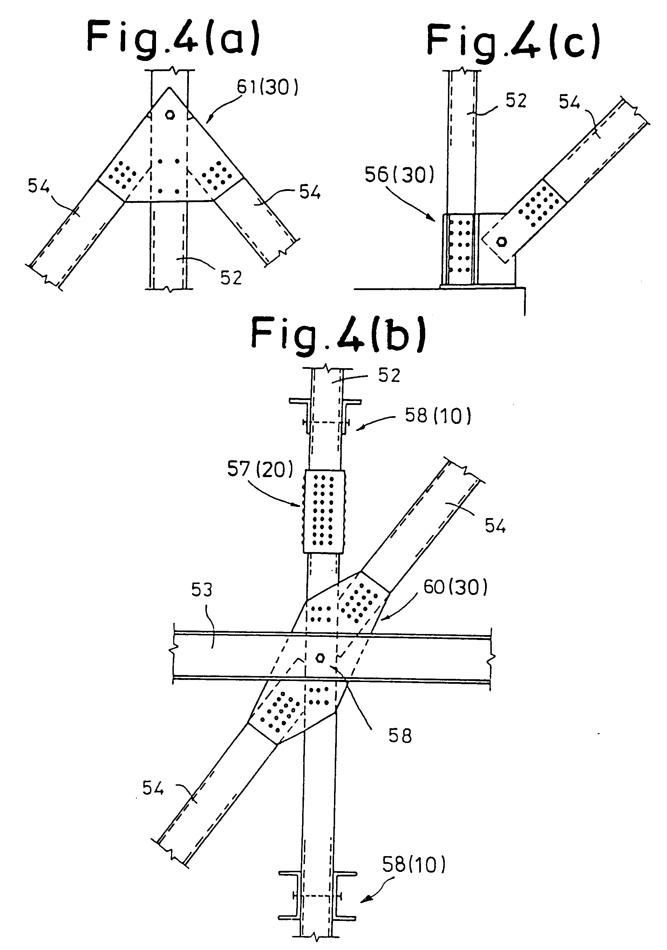

Figures 3 and 4 relate to the use of the method in accordance with the invention and Figure 3 illustrates a cooling tower 50 having a main or load-bearing framework 51 composed of FRP members. The framework includes columns 52 in the form of rectangular hollow pipes made of FRP, transverse beams 53 in the form of shaped bars made of FRP and reinforcing inclined cross beams 54 in the form of rectangular hollow pipes made of FRP, similar to the columns 52.

These FRP members are preliminarily subjected to various texts and experiments in order to measure their buckling strength and the influence on their strength of the absorption of water. On the basis of the measured results, a selection is made as to material composition, cross-section and wall thickness of the members.

When assembling the framework 51, if the FRP members were connected with each other in a manner similar to that used with timber structural members, i.e. by means of connectors having pawls which are struck into the members, a satisfactory joint strength would mot be attained. On the other hand, if the FRP members were drilled on site in a manner similar to that used with steel structural members to form a plurality of holes equal in pitch and size to the holes on the connector to be used and were then joined by bolting, it would be still difficult to ensure a satisfactory degree of joint strength.

In the case of an FRP hollow pipe, bolt holes would have to be drilled in opposite walls of the pipe since no bolt can be tightened at the hollow portion of the pipe. Such drilling of holes in the opposite walls of an FRP hollow pipe on site would be extremely difficult. Moreover, tightening of a bolt which passes through an FRP hollow pipe would tend to cause deformation of the pipe itself. Thus, the conventional connection systems are not practicable when connecting FRP members.

According to the present invention, joint structures 10,30 of the type described above are used, where appropriate, depending upon the shape of the members to be joined and the required joint strength. In particular, joints in accordance with the invention are used whenever high strength is required.

Each of the lowermost columns 52 is securely anchored at its lower end by a foundation connector 56 using a joint structure 30 to a foundation 55 made of concrete and surrounding a cooled water basin.

The transverse beams 53 are securely joined to the columns 52 by bolts extending through a respective spacer fitted in the column 52 at a bolt connection 58 corresponding to the joint structure 10.

In order to reinforce the columns 52 and the beams 53, cross beams 54 are diagonally arranged and are axially joined together by bracing connectors 60 using the joint structures 30 at the points of intersection of the columns 52 with the beams 53. Each of the beams 54 is securely anchored at its lower end to a foundation connector 56.

The columns 52 and transverse beams 53 are connected axially together using alternative joint structures 20, which are not the subject of the present invention. These joint structures 20 are also used at the intersection of the cross beams 54 with the columns 52, and also at intermediate points along the length of the beams 54.

As a result, the assembly of the cooling tower 50 and the joint work is much facilitated. The joint work efficiency is much improved since the use of FRP materials contributes to a decrease in weight of the structural members.

In the assembled cooling tower 50, the resistance to corrosion is remarkably improved thereby increasing the service life of the tower. Substantially no contaminants such as pieces of timber or rust particles are mixed into the cooled water and the operational control is simplified.

It will be understood that the pipes may be made of synthetic resins other than FRP and have any cross-section other than rectangular.

The connectors may be made not of metals but of synthetic resins such as FRP. Their shape and configuration may be changed as needs demand.

The synthetic resin structural members are not limited to FRP according to its narrow interpretation in which thermosetting plastics are used at the matrix but may be of reinforced plastics in a wider sense including FRTP (fibre reinforced thermo-plastics).

## Claims

1. A method of joining a hollow synthetic resin structural member (11) to a further member (12) characterised by the steps of fitting a spacer (13) with a hole therein into the hollow member with the hole in registry with opposed holes in the walls of the hollow member and inserting a bolt (14) through a hole in the further member and through the hole in the spacer (13) and tightening the bolt.

2. A method of joining a hollow synthetic resin structural member (11) to a further structural member (11) characterised by the steps of fitting a spacer (13) with a hole therein into the hollow member in registry with opposed holes in the walls thereof, inserting a bolt (32) through one or more holes in a connector (31) and through the hole in the spacer (13), tightening the bolt, placing a portion of the connector (31) in which holes are formed into engagement with the other member (11) drilling a hole in the other member in alignment with one of the holes formed in the connector (31), securing a blind rivet (33) in the aligned holes and repeating the drilling and riveting steps until the required number of rivets have been secured in the said other member.

3. A method as claimed in claim 2 characterised in that the connector (31) has holes formed in it in that portion which is adjacent to the hollow member (11) and that a hole is drilled in the hollow member in alignment with one of the holes formed in the connector (31), that a blind rivet (33) is secured in the aligned holes and that the drilling and riveting steps are repeated until the required number of rivets have been secured in the hollow member.

## Patentansprüche

1. Verfahren zum Verbinden eines hohlen Strukturelements (11) aus Kunstharz mit einem weiteren Element (12), gekennzeichnet durch die Schritte des Einsetzens eines Abstandsstückes (13) mit einem darin ausgebildeten Loch in dem hohlen Element, wobei das Loch mit einander gegenüberligenden Löchern in den Wänden des hohlen Elements in Übereinstimmung gebracht wird, des Einsetzens eines Bolzens (14) durch ein Loch in dem weiteren Element und durch das Loch in dem Abstandsstück (13) und des Festziehens des Bolzens.

2. Verfahren zum Verbinden eines hohlen Strukturelements (11) aus Kunstharz mit einem weiteren Strukturelement (11), gekennzeichnet durch die Schritte des Einsetzens eines Abstandsstückes (13) mit einem darin ausgebildeten Loch in das hohle Element in Übereinstimmung mit einander gegenüberliegenden Löchern in dessen Wand, des Einsetzens eines Bolzens (32) durch eines oder mehrere Löcher in einem Verbinder (31) und durch das Loch in dem Abstandsstück (13), des Festziehens des Bolzens, des Ineingriffbringens eines Abschnitts des Verbinders (31), in dem Löcher ausgebildet sind, mit dem anderen Element (11), des Bohrens eines Loches in das andere Element in Übereinstimmung mit einem der in dem Verbinder (31) ausgebildeten Löcher, des Setzens eines Blindniets (33) in die ausgerichteten Löcher und des Wiederholens des Bohrens und Nietens, bis die benötigte Anzahl von Nieten in das andere Element gesetzt worden sind.

3. Verfahren nach Anspruch 2, dadurch gekennzeichnet, daß in dem Verbinder (31) Löcher in dem Abschnitt ausgebildet sind, der an das hohle Element (11) anschließt, daß in Übereinstimmung mit einem der in dem Verbinder (31) ausgebildeten Löcher ein Loch in das hohle Element gebohrt wird, daß ein Blindniet (33) in die ausgerichteten Löcher gesetzt wird, und daß die Schritte des Bohrens und Nietens wiederholt werden, bis die benötigte Anzahl von Nieten in das hohle Element gesetzt worden sind.

## Revendications

1. Procédé de jonction d'un élément creux de construction (11) en résine synthétique à un autre élément (12), caractérisé par les étapes consistant à : disposer un écarteur (13) dans lequel on a pratiqué un trou, dans l'élément creux en plaçant le trou en correspondance avec des trous opposés pratiqués dans les parois de l'élément creux; insérer un boulon (14) à travers un trou pratiqué dans l'autre élément et à travers le trou pratiqué dans l'écarteur (13); et serrer le boulon.

2. Procédé de jonction d'un élément creux de construction (11) en résine synthétique à un autre élément de construction (11), caractérisé par les étapes consistant à : disposer un écarteur (13) dans lequel on a pratiqué un trou, dans l'élément creux en plaçant le trou en correspondance avec des trous opposés pratiqués dans les parois de ce dernier; insérer un boulon (32) à travers un ou plusieurs trous pratiqués dans un raccord (31) et à travers le trou pratiqué dans l'écarteur (13); serrer le boulon; placer une portion du raccord (31) dans lequel sont pratiqués des trous, en contact avec l'autre élément (11); forer un trou dans l'autre élément en alignement avec un des trous pratiqués dans le raccord (31); fixer un rivet borgne (33) dans les trous alignés; et répéter les étapes de forage et de rivetage jusqu'à ce que le nombre requis de rivets ait été fixé dans ledit autre élément.

3. Procédé selon la revendication 2, caractérisé en ce qu'on pratique des trous dans le raccord (31) dans la portion qui est adjacente à l'élément creux (11) et en ce qu'on fore un trou dans l'élément creux en alignement avec un des trous pratiqués dans le raccord (31), en ce qu'on fixe un rivet borgne (33) dans les trous alignés et en ce qu'on répète les étapes de forage et de rivetage jusqu'à ce que le nombre requis de rivets ait été fixé dans l'élément creux.
